Europäisches Patentamt

European Patent Office

Office européen des brevets

(19)

(11) Publication number: 0 200 040

A1

## (12) EUROPEAN PATENT APPLICATION

(21) Application number: 86104803.1

(22) Date of filing: 08.04.86

(51) Int. Cl.⁴: G06F 13/36

(30) Priority: 12.04.85 US 722889

(43) Date of publication of application:
10.12.86 Bulletin 86/45

(84) Designated Contracting States:
DE FR GB NL

(71) Applicant: TEKTRONIX, INC.
Tektronix Industrial Park D/S Y3-121 4900
S.W. Griffith Drive P.O. Box 500
Beaverton Oregon 97077(US)

(72) Inventor: DeLyle, Danner
1915 S. W. 139th
Beaverton Oregon 97005(US)

(74) Representative: Weickmann, Heinrich,
Dipl.-Ing. et al
Patentanwälte Dipl.-Ing. H.Weickmann
Dipl.-Phys.Dr. K.Fincke Dipl.-Ing.
F.A.Weickmann Dipl.-Chem. B. Huber Dr.-Ing.
H. Liska Dipl.-Phys.Dr. J. Prechtel
Möhlstrasse 22
D-8000 München 80(DE)

(54) Bus arbitrator.

(57) A bus arbitrator for controlling access of a master to a bus comprises a programable array logic unit for performing arbitration logic and a set of buffers for interconnecting the logic unit outputs to various lines of a control bus. The arbitrator generates bus access priority output signals which may be employed in either serial or parallel bus access priority resolution schemes and includes switch means to permit interconnection of the arbitrator in either type of scheme without circuit modification. The arbitrator asserts a common bus request output signal whenever the master requests access to the bus and retains bus access once acquired until detection of an asserted common bus request input signal. The common bus request output signal of each arbitrator accessing a bus is applied to a common bus request line which is then applied as the common bus request input to all arbitrators so that any arbitrator accessing the bus may continue to do so without arbitration until another arbtrator requests access. Switch means are provided to permanently assert the common bus request line so that all arbitrators must arbitrate for the bus prior to each bus access.

FIG. 1

## BUS ARBITRATOR

### Background of the Invention

The present invention relates to computer buses and in particular to an apparatus for arbitrating access to a computer bus by competing masters.

The bus structure of a computer system interconnects various components of the system such as the central processor, memory, and I/O devices, and allows them to interact with one another. The bus structure normally includes data, address, and control lines and each component is connected to these bus lines through an interface device. Only one "master" component accesses the bus at a time to command a "slave" component to send or receive the data on the data portion of the bus by generating an appropriate slave address and appropriate control signals on the bus. Where a system has more than one master capable of placing data on the bus, some arbitration means must be provided to determine which master shall have control of the bus at any given time.

In a bus structure such as described by the Institute of Electrical and Electronics Engineers IEEE-796 standard, each master is provided with an arbitrator unit having an input for receiving a bus access request from the the master, an input for receiving a bus priority signal from an external source (indicating another device is asserting priority), and an input from the bus indicating if the bus is "busy", correctly accessed by another master. If the arbitrator unit does not detect the priority signal but does detect the bus access request signal, then it asserts a serial priority output signal indicating that it wants access to the bus. The interface device can then provide bus access to the master when the busy signal indicates that the bus is free. The priority input and serial priority output signals of each interface device of a system are interconnected in a serial fashion with the serial priority output signal of one master being applied as the priority input signal to the next. The priority input signal to the first arbitrator unit in the series is permanently asserted so that the first unit has the highest bus access priority. The next arbitrator unit in the series has the second highest bus access priority because its priority input signal will be asserted if the first unit doesn't require a bus access. In a similar fashion, each successive interface device in the series will have successively lower priority.

In other implementations of the arbitration system, each arbitration unit is provided with a parallel priority output signal which it asserts whenever it wants access to the bus, regardless of the state of the input priority signal. The priority input and parallel priority output signals of the interface devices can be connected in a parallel fashion to a logic circuit which acts as a priority resolver, allocating bus access to the interface devices in any desired priority. The parallel priority method is more flexible than the serial method, particularly if the priority resolver is programmable, but does require the use of the additional priority resolver circuitry.

Often one master will want to access the bus several times in rapid succession. If the master must arbitrate for the bus between each access, the interface device must disable its data and address line buffers, turn off the busy signal, wait for the bus request signal from the master, assert priority, check to see if any other higher priority device is seeking control, turn on the busy signal, and then actually assume control of the bus. All these steps take time. This problem has been solved in part by allowing each master to assert a lock signal when it gains control of the bus. Once asserted, this lock signal tells the interface device to keep the master on the bus, thereby avoiding all the intermediate steps between each data transmission. One disadvantage in using the lock signal is that a low priority device can gain control of the bus and keep it for a long time to the exclusion of high priority devices.

It would be advantageous to have a low cost means to permit a low priority master to make multiple transmissions on a data bus without having to arbitrate between each transmission and yet still allow a higher priority master to obtain bus control when needed.

### Summary of the Invention

According to one aspect of the invention, a bus arbitrator unit is provided for each bus master accessing an IEEE-796 standard computer bus. Each arbitrator unit comprises a programmable array logic circuit which receives control input signals from the associated bus master and other arbitration logic units, and generates signals necessary to arbitrate with other arbitrator units for the bus and to cause the master to gain control of the bus when priority is established. Use of the programmable array logic circuit to perform arbitra tion logic permits inexpensive fabrication of the arbitration units in small packages.

According to another aspect of the invention, a common bus request line is connected to an input and to an output of each programmable array logic circuit of each arbitrator unit. Each logic unit is programmed so that when any master requests bus control, the associated arbitrator generates a signal on the common bus request line. When a master has control of the bus, the arbitrator allows it to remain on the bus until the arbitrator detects an assertion of the common bus request line by another bus arbitrator unit. At that time the bus arbitrator relinquishes control of the bus and arbitrates for recontrol. In this way the master may make multiple data transmissions on the bus without relinquishing bus control between each transmission but still must arbitrate for the bus when another master seeks bus control.

According to a further aspect of the invention, each programmable logic array is programmed to generate both serial and parallel priority signals and additional circuitry is provided to permit several arbitrator units of a system to be selectively interconnected to permit either the parallel or the serial priority resolution schemes.

It is therefore an object of the present invention to provide a new and improved apparatus for implementing a bus arbitration system in a low cost package.

It is another object of the invention to provide a new and improved bus arbitration apparatus which allows a master to make multiple data transmissions on a bus without relinquishing bus control between each transmission while still allowing a higher priority master to assume bus control when needed.

It is a further object of the invention to provide new and improved arbitrator which permits interconnection of several arbitrators in either the serial or parallel priority resolution schemes.

The subject matter of the present invention is particularly pointed out and distinctly claimed in the concluding portion of this specification. However, both the organization and method of operation, together with further advantages and objects thereof, may best be understood by reference to the following description taken in connection with accompanying drawings wherein like reference characters refer to like elements.

Drawings

FIG. 1 is a block diagram of the bus arbitrator of the present invention;

FIG. 2 is a block diagram illustrating how a set of arbitrators of FIG. 1 are interconnected for using either the serial or parallel priority resolution schemes;

FIG. 3 is a state diagram of the programmable logic array of FIG. 1; and

FIG. 4 is a schematic diagram of a programmable logic array.

Detailed Description

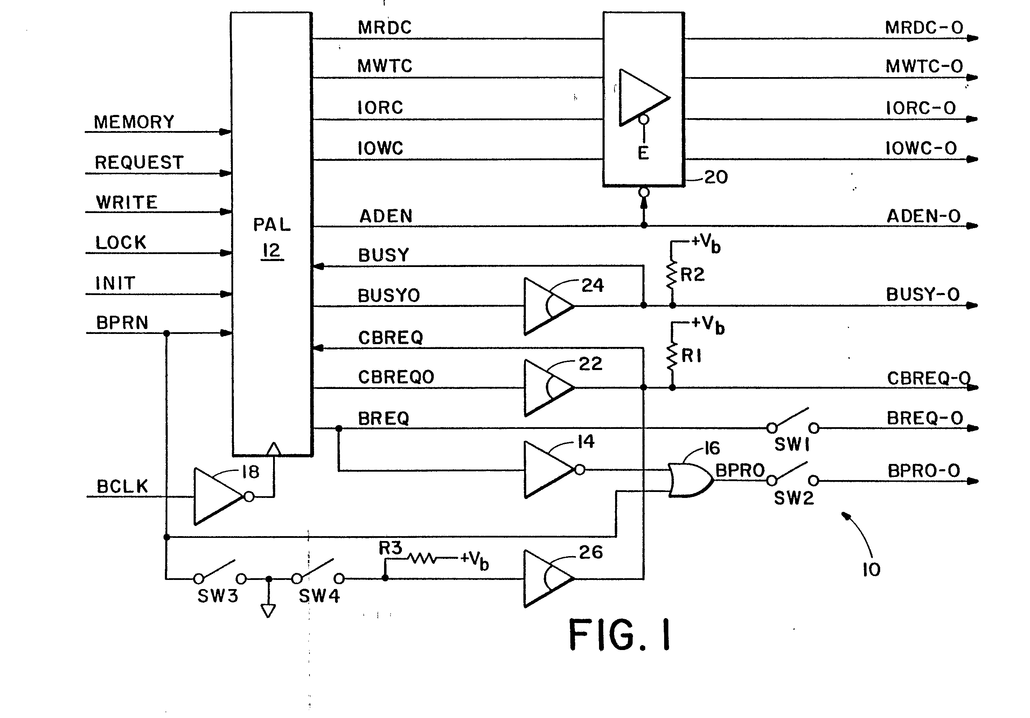

Referring to FIG. 1, there is depicted in block diagram form a bus arbitrator 10 according to the present invention, adapted to provide bus arbitration in accordance with an IEEE-796 standard bus arrangement. One such arbitrator unit is provided for each bus master in a computer system. The following inputs are provided to the bus arbitrator:

REQUEST: A master generates this input signal to inform the associated arbitrator that the master desires access to the bus for a read or a write operation. The signal is asserted until the master has completed the read or write operation.

WRITE: A master asserts this input signal to inform the arbitrator that the access requested is a write access. If the WRITE input signal is not asserted, then the access requested is a read access.

MEMORY: A master asserts this input signal to inform the arbitrator that a memory access is requested. If not asserted, the master has requested an I/O access.

LOCK: A master asserts this input signal to inform the arbitrator that it does not want the arbitrator to relinquish control of the bus once acquired. The arbitrator may relinquish control when the LOCK signal is no longer asserted.

INIT: The bus asserts this input signal to reset the arbitrator to an initial state.

BCLK: This is a clock signal carried on the bus and applied to all bus arbitrators to synchronize the operation of the arbitrators.

BPRN: This is a bus priority input signal. It is asserted when another arbitrator is seeking access to the bus and such other arbitrator has higher bus access priority than the arbitrator receiving the signal.

CBRQ: This is a common bus request input signal carried by the bus. It is asserted whenever any arbitrator seeks access to the bus.

BUSY: This signal is carried by the bus and is asserted whenever any master is currently accessing the bus.

Each arbitrator unit 10 also has the following output signals:

BREQ: This is a parallel priority bus request signal asserted when the master asserts the REQUEST signal.

BPRO: This is a serial priority bus request signal asserted when the master asserts the REQUEST signal provided that the BPRN input signal in not asserted.

CBRQ: This is a common bus request output signal asserted whenever the master asserts the REQUEST signal and which is deasserted whenever the master is currently accessing the bus.

BUSYO: This signal is asserted whenever the master is accessing or controls the bus.

ADEN: This signal is asserted to cause buffering circuits to interface the master to the bus.

IOWC: This signal is asserted when the master is performing an I/O write operation.

IORC: This signal is asserted when the master is performing an I/O read operation.

MWTC: This signal is asserted when the master is performing a memory write operation.

MRDC: This signal is asserted when the master is performing a memory read operation.

The bus arbitrator 10 of the present invention comprises a programmable array logic circuit -(PAL) 12, a state machine adapted to provide a set of outputs which may be programmed to change state in a predetermined fashion in response to a change in state of a set of inputs. The REQUEST, WRITE, MEMORY, LOCK, INIT, BPRN, CBRQ, and BUSY signals are applied as inputs to the PAL 12, while the CBREQO, BUSYO, ADEN, IOWC, IORC, MWTC, AND WRDC signal are generated as state outputs of the PAL 12. The BCLK signal is applied to the clock input of the PAL 12 through an inverting amplifier 18. The inverter is required because system changes are clocked on the trailing edge of the BCLK signal while state changes in the PAL 12, used in the preferred embodiment of the present are clocked on a rising clock pulse edge.

A switch SW1 connects the BREQ output of the PAL to a BREQ output line. The BREQ output is also applied to an input of an inverter 14. The output of inverter 14 is applied to an input of an OR gate 16 while the output of OR gate 16, comprising the BPRO signal, is applied to one terminal of another switch SW2. The BPRN input signal to PAL 12 is also applied to a second input of OR gate 16. The MRDC, MWTC, IORC, and IOWC output signals of each arbitrator 10 are connected to the MRDC-0, MWTC-0, IORC-O,and IOWC-0 lines of the bus through a four channel, tristate output buffer 20, enabled by the ADEN signal applied to an inverted ENABLE terminal E of the buffer. The CBREQO output of PAL 12 is applied to a CBREQ-0 line of the bus through another open collector buffer 22.

The BUSYO output is connected through an open collector buffer 24 to a BUSY-0 line of the bus which carries the BUSY signal back to an input of PAL 12. When not otherwise pulled down by a buffer connected thereto, the BUSY-0 line is pulled up by resistor R2 connected to source Vb. The BPRN input to the PAL 12 is also applied to a first terminal of a switch SW3. The second terminal of switch SW3 is grounded. When not grounded by a switch SW4, on input to open collector buffer 26 is pulled up by a resistor R3 coupling a positive voltage source Vb to the buffer input. The output of buffer 26 is connected to the CBREQ-0 line of the bus.

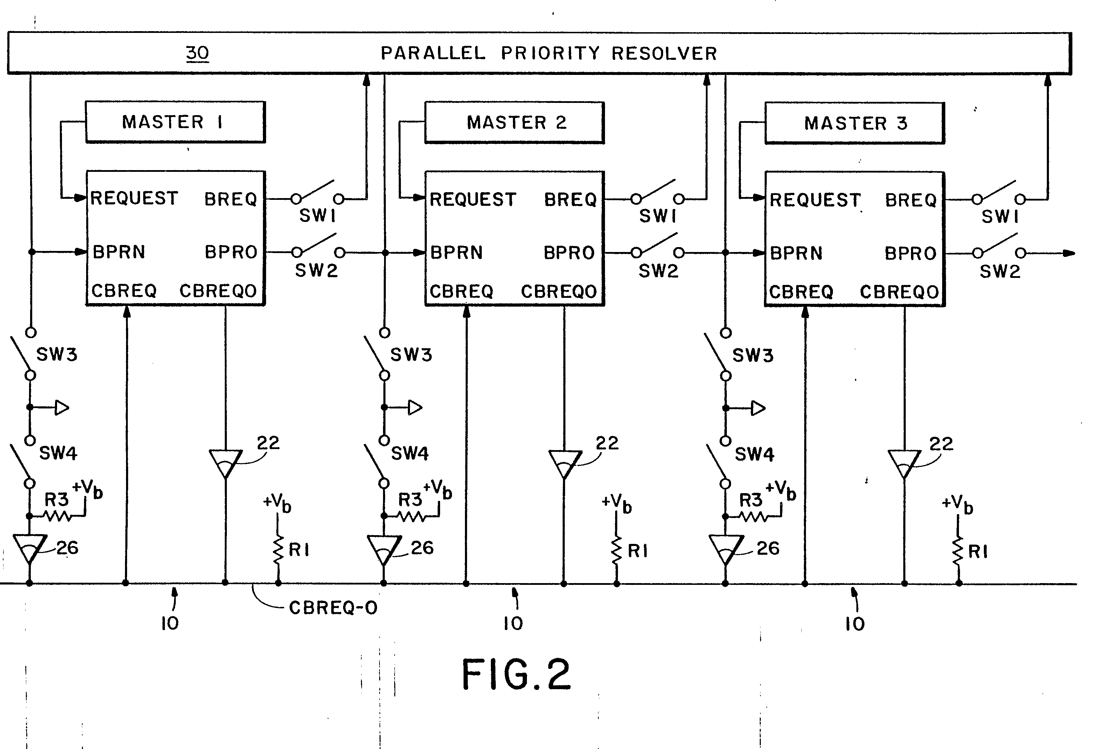

Bus arbitrator 10 is adapted to operate within two basic priority resolution schemes, parallel and serial. Both schemes are illustrated in FIG. 2. In the serial priority resolution scheme, two or more arbitrators 10 are connected in a series fashion whereby the BPRN input terminal of the arbitrator associated with the master having the highest priority (Master 1) is grounded by closing switch SW3. The SW3 switches of all lower priority arbitrators are left open. All arbitrator switches SW2 are closed while all arbitrator switches SW1 are opened.

The BPRO output of the highest priority arbitrator is applied through its switch SW2 to the BPRN input of the next highest priority arbitrator. The BPRO output of the next highest priority arbitrator 10 is then applied to the BPRN input of the third highest priority arbitrator.

If an arbitrator receives a REQUEST signal from the associated master, indicating that the master desires access to the bus, then the arbitrator will assert (drive low) its BPRO output, provided its BPRN input is high. Thus in this serial priority resolution scheme, if an arbitrator has a low BPRN input, it may assume that no arbitrator having a higher priority has requested bus access and that it may take control of the bus when the bus next becomes free.

In the parallel priority resolution scheme, all SW2 and SW3 switches are open and all SW1 switches are closed. The SW1 switches connect the BREQ outputs of every arbitrator 10 to corresponding inputs of a parallel priority resolver 30. Priority resolver 30 has separate outputs connected to each BPRN input of each arbitrator 10. Each arbitrator 30 asserts its BREQ output when it receives a REQUEST signal from the associated master. The priority resolver 10 is adapted to assert (ground) the BPRN input of the highest priority arbitrator requesting bus access by asserting its BREQ output signal. On detection the assertion of the BPRN input, an arbitrator 10 may then access the bus when it next becomes free. Circuits capable of performing the function of priority resolver 30 are well known in the art and are therefore not further detailed herein.

Means are provided to allow a master currently accessing the bus to continue to access the bus without arbitrating for it so long as no other master requests the bus. The CBREQ-0 line of the bus is connected to the CBREQ input of every arbitrator while the CBRQO output of every arbitrator 10 is connected to the CBREQ-0 line through its associated open collector buffer 22. Whenever a master asserts its REQUEST input to the associated arbitrator 10, the arbitrator asserts the common bus CBREQ signal (pulls it down), which in turn asserts (pulls down) the CBREQ input to every other arbitrator. This causes any master in possession of the bus to arbitrate for the bus at the end of the next bus access, provided the master currently using the bus has not locked it by asserting the LOCK bus signal. If this common bus feature is not used, then it can be disabled by closing the SW4 switch of each arbitrator circuit 12, thereby grounding the input to buffer 26 and pulling down the CBREQ-0 line. This causes every arbitrator to arbitrate for the bus after each bus access cycle, unless it has asserted the LOCK signal.

Each PAL 12, in the preferred embodiment, relates its output states to its input states according to the following state equations:

```
BUSYO :=    BPRN      * BREQ     * REQUEST * /BUSY * /INIT
        +  BUSYO      * ADEN     * /INIT
BREQ  :=    REQUEST   * /INIT
        +  BREQ       * ADEN     * /INIT
CBREQO:=    REQUEST   * /BUSYO   * /INIT
ADEN  :=    REQUEST   * BUSYO    * /INIT
        +  ADEN       * /CBREQ   * /INIT
        +  ADEN       * LOCK     * /INIT
        +  ADEN       * MRD      * /INIT
        +  ADEN       * MWR      * /INIT
        +  ADEN       * IORD     * /INIT
        +  ADEN       * IOWR     * /INIT
MRDC  =    ADEN      * MEMORY   * /WRITE * REQUEST
MWTC  =    ADEN      * MEMORY   * WRITE  * REQUEST
IORC  =    ADEN      * /MEMORY  * /WRITE * REQUEST
IOWC  =    ADEN      * /MEMORY  * WRITE  * REQUEST
```

In the above equations, the ":=" symbol indicates that the output is clocked by the BCLK signal, the "=" symbol indicates that the output is not clocked by the BCLK signal, the "+" symbol indicates an OR function, the "*" symbol indicates an AND function, and the "/" symbol denotes a deasserted state.

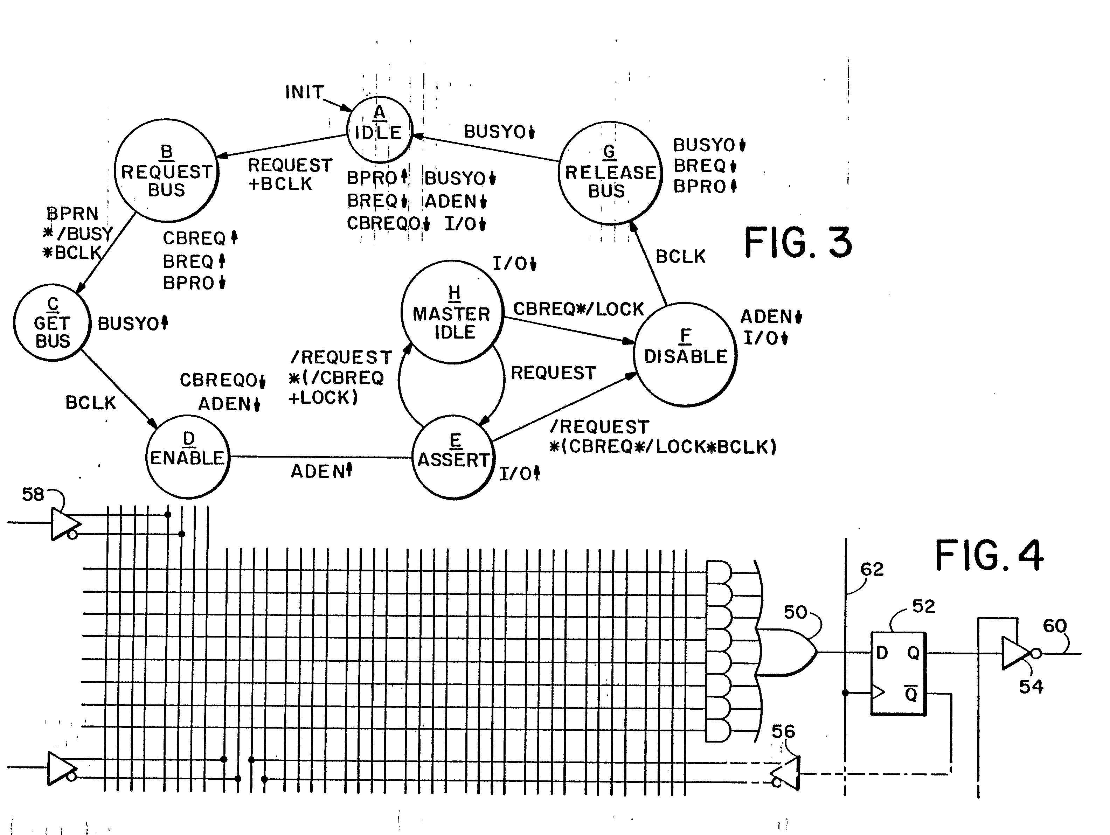

FIG. 3 is a state diagram depicting the operation of the bus arbitrator 10 resulting from the above relations. The INIT signal is carried on the bus and is asserted to reset every arbitrator to an initial IDLE state A regardless of its current state. Therefore the receipt of an INIT signal causes an arbitrator 10 to enter the IDLE state A from any other state. In the IDLE state, the master does not currently have access to the bus so the BUSYO output signal will not be asserted, nor will the ADEN, IOWC, IORC, MWTC and MRDC signals be asserted. Since the master is not currently seeking access to the bus, the BPRO, BREQ and CBREQO output signals will not be asserted.

When the master desires bus access, it asserts the REQUEST input to the bus arbitrator 10. On the falling edge of the next BCLK pulse, the bus arbitrator 10 changes to a REQUEST BUS state B wherein the BREQ output is asserted to bid for priority if connected in a parallel priority resolution system. The CBREQ output is also asserted to inform other masters that bus access is being requested. The arbitrator 10 remains in the REQUEST BUS state as long as a BUSY input signal is asserted, indicating that another master has control of the bus, and as long as the BPRN input signal is not asserted, indicating that another master of a higher priority is requesting the bus.

When the bus is not in use, and when no other master of higher priority requests the bus, then on the next BCLK signal the arbitrator 10 moves to a GET BUS state C. In this state the BPRO signal is deasserted, indicating that the master has highest priority if connected in a serial priority resolution - scheme, and the BUSYO signal is asserted to indicate that the master has assumed control of the bus and that the bus is now busy.

On the next BCLK pulse, the system moves to ENABLE state D wherein the ADEN signal is asserted to link the master to the bus, and the CBREQ signal is deasserted.

As soon as the ADEN signal goes high, the arbitrator 10 moves to an ASSERT state E wherein one of the read/write control outputs MDRC, MWRT, IORC, or IOWC is asserted, depending on the current state of the WRITE and MEMORY inputs from the master. Since the ADEN signal is asserted, the appropriate read/write control line MRDC-0, MWRT-0, IORC-0, or IOWC-0 of FIG.1 is also asserted. The ADEN signal is also used to enable buffers connecting the master to the bus and allowing the master to read or write data on the bus. When the master has completed the bus access, it deasserts the REQUEST input.

The arbitrator will remain in the ASSERT state until the master deasserts the REQUEST input. If, in the interim, another master asserts its REQUST bus input to its associated arbitrator 10, that arbitrator will assert its CBREQO output, causing the CBREQ input to the arbitrator of the master currently accessing the bus to be asserted. If the current master has not asserted the LOCK signal to retain control of the bus, the arbitrator will move to a DISABLE state F on the next BCLK pulse after the REQUEST input from the current master is deasserted. In the DISABLE state, the ADEN signal and MRDC, MWTC, IORC, and IOWC outputs are all deasserted.

On the next BCLK pulse, the arbitrator 10 moves to the RELEASE BUS state G where the BPRO signal is asserted and the BREQ signal is deasserted so that the arbitrator can compete for serial or parallel priority depending on the system employed. The BUSYO output signal is also deasserted to indicate that the bus is no longer busy.

When the BUSYO signal has been deasserted, the arbitrator moves back to the IDLE state A. A complete bus arbitration cycle involving passing through states A through G and back to state A requires at least five BLCK cycles. Often a master may want to access the bus repeatedly, as for instance during a read-modify-write operation. In such case it is desirable to permit a master to retain bus access without arbitrating for it after each bus access. The master may do so by asserting the lock signal. This signal allows the master to retain control of the bus without arbitration, once it has acquired the bus. Arbitration is not required even if another master of higher priority has requested bus access. A master repeatedly accessing the bus can also avoid arbitration if the CBRQ function is activated by opening switches SW4 of FIG. 2, unless another master of higher priority has requested bus access.

Thus if the master has control of the bus and the arbitrator is in the ASSERT state E and if the master has generated the LOCK signal to prevent others from arbitrating for the bus, then as the REQUEST signal is deasserted, the arbitrator will move to a MASTER IDLE state H. The arbitrator will also move to the MASTER IDLE state if no other master is requesting bus access, as indicated by a deasserted CBREQ input to the arbitrator 10. In the master idle state, the arbitrator continues to assert the BUSYO and ADEN signals, while the MRDC, MWTC, IORC, and IOWC output signals are deasserted. The ADEN signal keeps the master on the bus and the BUSYO signal prevents any other master from accessing the bus.

The arbitrator remains in the MASTER IDLE state until the master indicates that it wants to access the bus again by asserting the REQUEST input signal, once more forcing the arbitrator to return to the ASSERT state where one of the MRDC, MWTC, IORC OR IOWC lines is reasserted to effect the data transfer. As long as the master continues to assert the LOCK signal, or as long as no other arbitrator asserts the CBEQ-0 line, the arbitrator will continue to move back and forth between the ASSERT and the MASTER IDLE states as the REQUEST signal is asserted and deasserted, allowing the master to access the bus many times without interruption from another master. Once the lock signal is deactivated and the CBEQ-0 line is asserted, the arbitrator will move from either the MASTER IDLE or the ASSERT states to the DISABLE state on the next BCLK pulse. Use of the master IDLE state permits a master to repeatedly access the bus without having to rearbitrate for its use after each access, thereby avoiding the five extra BCLK cycles required for the arbitration.

In the present invention the PAL 12 is a Model 20R4A or 16R4A programmable array logic circuit manufactured by Monolithic Memories, Inc. Referring to FIG. 4, the PAL comprises a programmable array logic circuit illustrated in part in the figure. Each of the state outputs are generated by a logic circuit of the type depicted comprising an OR gate 50 provided with a number of inputs via drivers from horizontal lines of the matrix, with the OR gate driving a D flip-flop 52. The Q output of the flip-flop is provided to inverter 54, and also the inverted Q output of the flip-flop is coupled through amplifier 56 to provide inverted feedback and not inverted feedback output to the matrix. A clocking input for the D flip-flop is supplied on lead 62. In order to implement the logic of the PAL, crossovers are enabled at desired intersections of the horizontal and vertical conductors. Also the array as depicted in FIG. 4 is repeated n times, when n is the number of state outputs to be provided on successive leads 60. It will be understood that the vertical lines in FIG. 4 represent inputs from successive input amplifiers such as amplifier 58, as well as feedback from successive feedback amplifiers such as amplifier 56.

The following is a schedule of fuse connections for the PAL, model 20R4 manufactured by Monolithic Memories, Inc.

```
               11   1111  1111  2222  2222  2233  3333  3333
      0123  4567  8901  2345  6789  0123  4567  8901  2345  6789

  0   0000  0000  0000  0000  0000  0000  0000  0000  0000  0000
  1   0000  0000  0000  0000  0000  0000  0000  0000  0000  0000
  2   0000  0000  0000  0000  0000  0000  0000  0000  0000  0000
  3   0000  0000  0000  0000  0000  0000  0000  0000  0000  0000
  4   0000  0000  0000  0000  0000  0000  0000  0000  0000  0000
  5   0000  0000  0000  0000  0000  0000  0000  0000  0000  0000
  6   0000  0000  0000  0000  0000  0000  0000  0000  0000  0000
  7   0000  0000  0000  0000  0000  0000  0000  0000  0000  0000

  8   ----  ----  ----  ----  ----  ----  ----  ----  ----  ----
  9   X---  -X--  ----  X--X  ----  ----  ----  ----  ----  ----
 10   XXXX  XXXX  XXXX  XXXX  XXXX  XXXX  XXXX  XXXX  XXXX  XXXX
 11   XXXX  XXXX  XXXX  XXXX  XXXX  XXXX  XXXX  XXXX  XXXX  XXXX
 12   XXXX  XXXX  XXXX  XXXX  XXXX  XXXX  XXXX  XXXX  XXXX  XXXX
```

```
13 XXXX XXXX XXXX XXXX XXXX XXXX XXXX XXXX XXXX XXXX
14 XXXX XXXX XXXX XXXX XXXX XXXX XXXX XXXX XXXX XXXX
15 XXXX XXXX XXXX XXXX XXXX XXXX XXXX XXXX XXXX XXXX

16 ---- ---- ---- ---- ---- ---- ---- ---- ---- ----
17 -X-- -X-- ---- X--X ---- ---- ---- ---- ---- ----
18 XXXX XXXX XXXX XXXX XXXX XXXX XXXX XXXX XXXX XXXX
19 XXXX XXXX XXXX XXXX XXXX XXXX XXXX XXXX XXXX XXXX
20 XXXX XXXX XXXX XXXX XXXX XXXX XXXX XXXX XXXX XXXX
21 XXXX XXXX XXXX XXXX XXXX XXXX XXXX XXXX XXXX XXXX
22 XXXX XXXX XXXX XXXX XXXX XXXX XXXX XXXX XXXX XXXX
23 XXXX XXXX XXXX XXXX XXXX XXXX XXXX XXXX XXXX XXXX

24 ---- ---- ---- -X-- X--X ---- ---- ---- ---- ----
25 ---- ---- ---- ---X X--- ---- ---- ---- ---- --X-
26 ---- ---- -X-- ---X X--- ---- ---- ---- ---- ----
27 ---- ---X ---- ---X X--- ---- ---- ---- ---- ----
28 ---- ---- ---X ---X X--- ---- ---- ---- ---- ----
29 ---- ---- ---- ---X X--- ---- ---- ---X ---- ----
30 ---- ---- ---- ---X X--- ---- ---- ---- ---X ----
31 XXXX XXXX XXXX XXXX XXXX XXXX XXXX XXXX XXXX XXXX

32 --X- ---- ---- -X-- X--- -X-- ---X ---- ---- ----
33 ---- ---- ---- ---X X--X ---- ---- ---- ---- ----
34 XXXX XXXX XXXX XXXX XXXX XXXX XXXX XXXX XXXX XXXX
35 XXXX XXXX XXXX XXXX XXXX XXXX XXXX XXXX XXXX XXXX
36 XXXX XXXX XXXX XXXX XXXX XXXX XXXX XXXX XXXX XXXX
37 XXXX XXXX XXXX XXXX XXXX XXXX XXXX XXXX XXXX XXXX
38 XXXX XXXX XXXX XXXX XXXX XXXX XXXX XXXX XXXX XXXX
39 XXXX XXXX XXXX XXXX XXXX XXXX XXXX XXXX XXXX XXXX

40 ---- ---- ---- -X-- X-X- ---- ---- ---- ---- ----
41 XXXX XXXX XXXX XXXX XXXX XXXX XXXX XXXX XXXX XXXX
42 XXXX XXXX XXXX XXXX XXXX XXXX XXXX XXXX XXXX XXXX
43 XXXX XXXX XXXX XXXX XXXX XXXX XXXX XXXX XXXX XXXX
```

55

```
44 XXXX XXXX XXXX XXXX XXXX XXXX XXXX XXXX XXXX XXXX
45 XXXX XXXX XXXX XXXX XXXX XXXX XXXX XXXX XXXX XXXX
46 XXXX XXXX XXXX XXXX XXXX XXXX XXXX XXXX XXXX XXXX
47 XXXX XXXX XXXX XXXX XXXX XXXX XXXX XXXX XXXX XXXX


48 ---- ---- ---- -X-- X--- ---- ---- ---- ---- ----
49 ---- ---- ---- ---X X--- ---- ---X ---- ---- ----
50 ---- ---- ---- -X-- X--- ---- ---X ---- ---- ----
51 XXXX XXXX XXXX XXXX XXXX XXXX XXXX XXXX XXXX XXXX
52 XXXX XXXX XXXX XXXX XXXX XXXX XXXX XXXX XXXX XXXX
53 XXXX XXXX XXXX XXXX XXXX XXXX XXXX XXXX XXXX XXXX
54 XXXX XXXX XXXX XXXX XXXX XXXX XXXX XXXX XXXX XXXX
55 XXXX XXXX XXXX XXXX XXXX XXXX XXXX XXXX XXXX XXXX


56 ---- ---- ---- ---- ---- ---- ---- ---- ---- ----
57 X--- -X-- ---- X--X ---- ---- ---- ---- ---- ----
58 XXXX XXXX XXXX XXXX XXXX XXXX XXXX XXXX XXXX XXXX
59 XXXX XXXX XXXX XXXX XXXX XXXX XXXX XXXX XXXX XXXX
60 XXXX XXXX XXXX XXXX XXXX XXXX XXXX XXXX XXXX XXXX
61 XXXX XXXX XXXX XXXX XXXX XXXX XXXX XXXX XXXX XXXX
62 XXXX XXXX XXXX XXXX XXXX XXXX XXXX XXXX XXXX XXXX
63 XXXX XXXX XXXX XXXX XXXX XXXX XXXX XXXX XXXX XXXX


64 ---- ---- ---- ---- ---- ---- ---- ---- ---- ----
65 -X-- X--- ---- X--X ---- ---- ---- ---- ---- ----
66 XXXX XXXX XXXX XXXX XXXX XXXX XXXX XXXX XXXX XXXX
67 XXXX XXXX XXXX XXXX XXXX XXXX XXXX XXXX XXXX XXXX
68 XXXX XXXX XXXX XXXX XXXX XXXX XXXX XXXX XXXX XXXX
69 XXXX XXXX XXXX XXXX XXXX XXXX XXXX XXXX XXXX XXXX
70 XXXX XXXX XXXX XXXX XXXX XXXX XXXX XXXX XXXX XXXX
71 XXXX XXXX XXXX XXXX XXXX XXXX XXXX XXXX XXXX XXXX


72 0000 0000 0000 0000 0000 0000 0000 0000 0000 0000
73 0000 0000 0000 0000 0000 0000 0000 0000 0000 0000
74 0000 0000 0000 0000 0000 0000 0000 0000 0000 0000
```

55

```
75  0000  0000  0000  0000  0000  0000  0000  0000  0000  0000
76  0000  0000  0000  0000  0000  0000  0000  0000  0000  0000
77  0000  0000  0000  0000  0000  0000  0000  0000  0000  0000
78  0000  0000  0000  0000  0000  0000  0000  0000  0000  0000
79  0000  0000  0000  0000  0000  0000  0000  0000  0000  0000
```

LEGEND: X: FUSE NOT BLOWN (L,N,O) -: FUSE BLOWN (H,P,1)

O: PHANTOM FUSE (L,N,O) O: PHANTOM FUSE - (H,P,1)

NUMBER OF FUSES BLOWN = 784

In the above fuse connection charts the PAL outputs are related to horizontal lines as follows:

```
Line      PAL Output
9         MRDC
10        MWTC
24-30     ADEN
32-33     BUSYO
40        CBREQO
48-50     BREQ
57        IORD
65        IOWR
```

The vertical lines of the fuse connection chart relate to system variables as follows:

| 13 | REQUEST |
|----|---------|
| 15 | ADEN |
| 16 | /INIT |
| 18 | /BUSYO |
| 19 | BUSYO |
| 21 | BUSY |
| 27 | BREQ |
| 31 | IORC |
| 35 | IOWC |
| 38 | /CBREQ |

The bus arbitrator of the present invention thus uses a programmable array logic circuit to implement arbitration logic in a compact and inexpensively fabricated package. The arbitrator permits a master to make multiple bus access without arbitrating for the bus between each access and may be used in either parallel or serial priority resolution systems without modification.

While a preferred embodiment of the present invention has been shown and described, it will be apparent to those skilled in the art that many changes and modifications may be made without departing from the invention in its broader aspects. The appended claims are therefore intended to cover all such changes and modifications as fall within the true spirit and scope of the invention.

**Claims**

1. A bus arbitrator for controlling access by a master to a bus comprising:

a programmable array logic circuit programmed to generate at least one output signal necessary to implement a bus arbitration system; and

means to buffer said at least one output signal.

2. A bus arbitrator for controlling access by a master to a bus, said arbitrator comprising:

means to generate a parallel priority resolution output signal, asserted when the master requests bus access, for transmittal to a priority resolving circuit when said arbitrator is used in a parallel priority resolution system;

means to generate a serial priority resolution output signal, asserted when the master requests bus access and has a higher bus access priority than any other master requesting bus access in a serial priority resolution system; and

means to selectively interconnect said arbitrator in either a serial or a parallel priority resolution system.

3. A bus arbitrator as in claim 2 wherein said means to generate said parallel and serial priority resolution output signals comprise a programmable array logic circuit.

4. A bus arbitrator for controlling access by a first master to a bus, said arbitrator comprising:

a programmable array logic circuit to generate a parallel priority resolution output signal, asserted whenever said first master requests bus access, for transmittal to a priority resolving circuit when said arbitrator is used in a parallel priority resolution system; and

means for generating a serial priority resolution output signal, said serial signal being asserted whenever said parallel signal is asserted while an input priority resolution signal is not asserted.

5. A bus arbitrator as in claim 4 further comprising:

means to continuously assert the input priority signal when said first master is to have a higher bus access priority than any other master when said arbitrator is used in a serial priority resolution system.

6. A bus arbitrator as in claim 4 further comprising:

switch means to selectively connect or disconnect said serial priority resolution output signal from an external circuit.

7. A bus arbitrator as in claim 4 further comprising:

switch means to selectively connect or disconnect said parallel priority resolution output signal from said priority resolving circuit.

8. A bus arbitrator as in claim 4 further comprising:

means to continuously assert the input priority signal when said first master is to have a higher bus access priority than any other master when said arbitrator is used in a serial priority resolution system;

switch means to selectively connect or disconnect said serial priority resolution output signal from an external circuit; and

switch means to selectively connect or disconned said parallel priority resolution output signal from said priority resolving circuit.

9. A bus arbitrator for controlling access by a first master to a bus, said arbitrator comprising:

a programmable array logic circuit programmed to assert a common bus request output signal whenever said first master requests, but does not have, access to the bus and to retain bus access once acquired until detection of an asserted common bus request input signal; and

buffering means to place said common bus request output signal on a common request bus line for applying said common bus output signal as said common bus input signal to other arbitrators associated with other masters and for applying common bus output signals generated by said other arbitrators as said common bus input signal to said abritrator.

10. A bus arbitrator as in claim 9 further comprising:

switch means to selectively assert said common bus line regardless of the assertion of a common bus request output signal by said other arbitrators.

FIG. I

FIG.2

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | ELECTRONIC DESIGN, vol. 32, no. 22, October 1984, pages 324,326, Waseca, Minnesota, US; J. BRCICH: "Bus adapter connects two-wire peripherals to three-wire VMEbus" * Whole document * | 1-4 | G 06 F  13/36 |
| Y | IDEM | 6,7,9 | |
| X | PATENTS ABSTRACTS OF JAPAN, vol. 7, no. 30 (P-173)[1175], 5th February 1983; & JP - A - 57 182 820 (MITSUBISHI DENKI K.K.) 10-11-1982 * Whole document * | 2 | |
| A | IDEM | 6 | **TECHNICAL FIELDS SEARCHED (Int. Cl.4)** |
| X | ELEKTRONIK, vol. 31, no. 2, February 1982, pages 55-62, Munich, DE; H. SCHMID: "Multi-Mikroprozessor-Systeme", Part 2: "Technischer Stand" * Page 56, column 2, paragraphs 2-4; figures 2,3 * | 2 | G 06 F  13/36 |
| A | IDEM | 5,8 | |

-/-

The present search report has been drawn up for all claims

| Place of search | Date of completion of the search | Examiner |
|---|---|---|
| THE HAGUE | 06-08-1986 | CHUGG D.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

## DOCUMENTS CONSIDERED TO BE RELEVANT

Page  2

| Category | Citation of document with indication, where appropriate, of relevant passages | Relevant to claim | CLASSIFICATION OF THE APPLICATION (Int. Cl.4) |
|---|---|---|---|
| X | WESCON CONFERENCE RECORD, San Francisco, California, US, 18th-20th September 1979, pages 1-6; L. SOLTESZ: "Multiprocessing with single board computers - hardware considerations"<br>* Pages 4,5; figures 4-6 * | 2 | |
| Y | IDEM | 9 | |
| A | IDEM | 10 | |
| Y | --- <br>INTERFACES IN COMPUTING, vol. 1, no. 3, August 1983, pages 193-210, Elsevier Sequoia, Amsterdam, NL; M. LOBELLE: "VME bus interfacing: A case study"<br>* Page 203, line 1 - page 204, line 2, figure 4 * | 6,7 | |

-----

TECHNICAL FIELDS
SEARCHED (Int. Cl.4)

The present search report has been drawn up for all claims

| Place of search | Date of completion of the search | Examiner |
|---|---|---|
| THE HAGUE | 06-08-1986 | CHUGG D.J. |